# EUROPEAN PATENT APPLICATION

(11) **EP 3 866 177 A1**
(43) Date of publication of application: **18.08.2021**
(21) Application number: 19870406.6
(22) Date of filing: 10.10.2019
(51) Int. Cl.: G21D 3/06, G06N 3/08

(54) **ABNORMAL DRIVING STATE DETERMINATION DEVICE AND METHOD USING NEURAL NETWORK MODEL**

(30) Priority: 12.10.2018 KR 20180121648
(71) Applicant: Korea Hydro & Nuclear Power Co., Ltd, 38120 Gyeongsangbuk-do (KR)
(72) Inventor: KIM, Yun Goo, Daejeon 34094 (KR); KIM, Tae Joon, Daejeon 34080 (KR); CHOI, Sun Mi, Daejeon 34544 (KR); MOON, Jong Seol, Sejong 30150 (KR); LEE, Do Hwan, Daejeon 34101 (KR)
(74) Representative: Habermann, Hruschka & Schnabel
(86) International application number: PCT/KR2019/013270
(87) International publication number: WO 2020/076081

(57) **Abstract**

The present invention relates to an abnormal driving state determination device using a neural network model, and the device can comprise: an abnormal driving state data generation unit for generating abnormal driving state data on the basis of information related to an abnormal driving state; an abnormal driving state learning unit which receives the abnormal driving state data so as to visualize the abnormal driving state data through a visualization algorithm, thereby allowing the abnormal driving state data to be learned by a neural network model; and an abnormal driving state determination unit including the neural network model for determining an abnormal state on the basis of the learned abnormal driving state data.

## Description

### Technical Field

The present disclosure relates to an apparatus and method for determining an abnormal driving state using a neural network model, and more specifically, to an apparatus and method for determining an abnormal driving state using a neural network model capable of providing an abnormal driving state by utilizing an artificial intelligence neural network.

### Background Art

Nuclear power plants have a variety of abnormal driving states. When an abnormal driving state occurs, an alarm occurs in the main control room, and the state of the related power plant changes. Changes in the state of the power plant include temperature, pressure, and flow.

An operator determines which abnormal driving state has occurred based on the alarm from the power plant, and then takes appropriate measures according to the procedure for the abnormal driving state.

However, there are hundreds of abnormal driving states in a nuclear power plant, and since it is difficult for an inexperienced operator to make an accurate judgement on the abnormal driving state, there may be a failure to take appropriate measures for the abnormal driving state.

Therefore, a method of quickly determining and providing an abnormal driving state is being studied so that an operator can make an appropriate judgement on the abnormal driving state.

### Disclosure

### Technical Problem

The present disclosure is to solve the problem of the related art as described above, and it is an object of the present disclosure to quickly determine an abnormal driving state of a nuclear power plant and provide an operator with relevant information.

### Technical Solution

In order to achieve the above object, the present disclosure provides an abnormal driving state determination device using a neural network model, and the device includes: an abnormal driving state data generation unit configured to generate abnormal driving state data based on information on an abnormal driving state; an abnormal driving state learning unit configured to receive the abnormal driving state data so as to visualize the abnormal driving state data through a visualization algorithm, thereby allowing the abnormal driving state data to be learned by a neural network model; and an abnormal driving state determination unit provided with a neural network model for determining an abnormal state on the basis of the learned abnormal driving state data.

Here, the abnormal driving state learning unit may be provided with a first visualization arrangement unit, and the first visualization arrangement unit may arrange operating variables based on physical locations, thereby collecting and arranging operating variables corresponding to locations where an abnormal driving state occurs.

Further, the abnormal driving state learning unit may be provided with a second visualization arrangement unit, and the second visualization arrangement unit may preferentially arrange physically identical variables.

Further, the abnormal driving state data generation unit may include a scenario database and a simulator, and the simulator may generate the abnormal driving state data by implementing the abnormal driving state based on a driving scenario for the abnormal driving state, which is stored in the scenario database.

In addition, since the neural network model is provided as a plurality of neural network models, the abnormal driving state data to be learned may differ according to an operating variable.

Further, when the abnormal driving state determination unit determines an abnormal driving state, a procedure providing unit may provide an abnormal driving procedure comprising a response to the abnormal driving state.

Further, the abnormal driving state determination unit may further include a matching unit, and the signal matching unit transmits information on an abnormal driving state to correspond to equipment.

Meanwhile, in order to achieve the above object, the present disclosure provides an abnormal driving state determining method using a neural network model, and the method includes: generating, by an abnormal driving state data generating unit, abnormal driving state data based on information on an abnormal driving state; receiving the abnormal driving state data so as to visualize the abnormal driving state data through a visualization algorithm, thereby allowing the abnormal driving state data to be learned by a neural network model; determining an abnormal state on the basis of the learned abnormal driving state data by an abnormal driving state determination unit; and providing, by a procedure providing unit, an operator with a procedure for responding to the abnormal driving state.

### Advantageous Effects

The apparatus and method for determining an abnormal driving state using a neural network model according to the present disclosure can accurately determine the type of abnormal driving state within a short time using a neural network model when various abnormal driving states occur, and provide the operator with the type of the abnormal driving state. It is possible to quickly and accurately respond to abnormal driving states of nuclear power plants, and to improve the safety of nuclear power plants.

### Description of Drawings

FIG. 1 is a diagram schematically illustrating an abnormal driving state determining apparatus to which a neural network model is applied according to an embodiment of the present disclosure.
FIG. 2 is a block diagram of an abnormal driving state determining apparatus to which a neural network model is applied according to an embodiment of the present disclosure.
FIG. 3 is a diagram schematically illustrating an operation process of an abnormal driving state determining apparatus to which a neural network model is applied according to an embodiment of the present disclosure.
FIG. 4 is a flowchart of an abnormal driving state determining apparatus to which a neural network model is applied according to an embodiment of the present disclosure.
FIG. 5 is a diagram schematically illustrating an arrangement of operating variables by a first visualization arrangement unit according to physical locations of the driving variables in an abnormal driving state determining apparatus to which a neural network model is applied according to an embodiment of the present disclosure.
FIG. 6 is a diagram schematically illustrating an arrangement of operating variables by a second visualization arrangement unit according to physical characteristics of the driving variables in an abnormal driving state determining apparatus to which a neural network model is applied according to an embodiment of the present disclosure.

[Detailed Description of Main Elements]

- 100:: abnormal driving state data generation unit
- 110:: scenario database
- 120:: simulator
- 200:: abnormal driving state data learning unit
- 210:: first visualization arrangement unit
- 220:: second visualization arrangement unit
- 300:: abnormal driving state determination unit
- 310:: neural network model
- 320:: signal matching unit
- 400:: abnormal driving state monitoring unit
- 500:: procedure providing unit

### Mode for Disclosure

Hereinafter, preferred embodiments of the present disclosure will be described with reference to the accompanying drawings. However, although some configurations unrelated to the spirit of the present disclosure will be omitted or compressed, the omitted configurations are not necessarily needless in the present disclosure and may be combined and used by those skilled in the art.

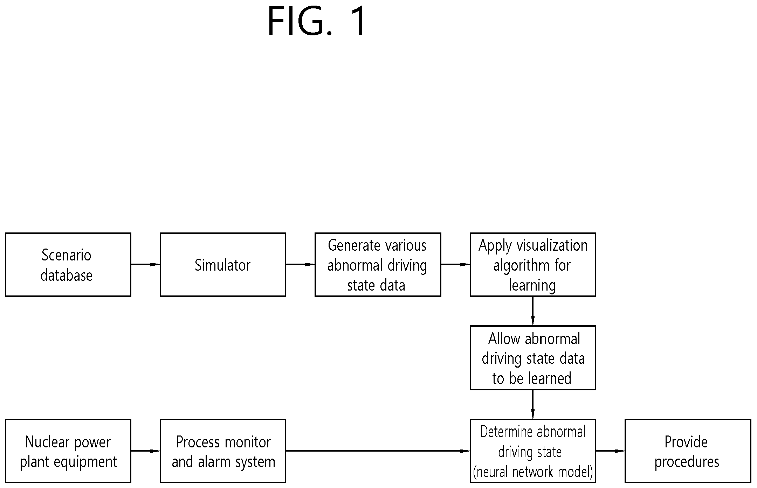

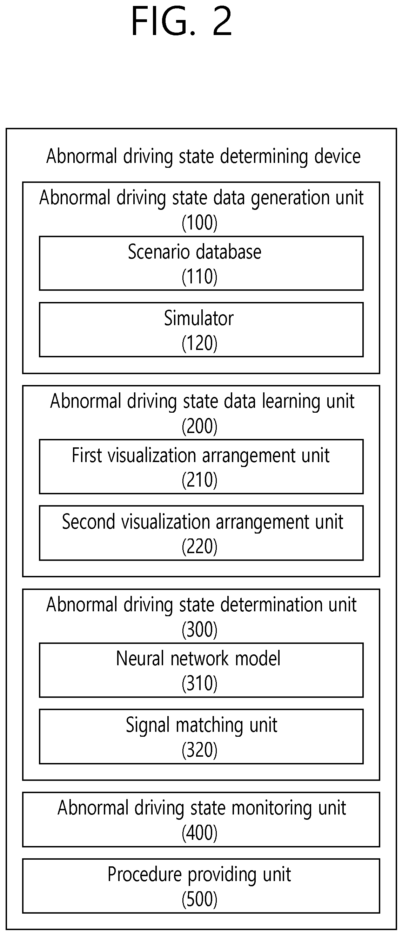

FIG. 1 is a schematic diagram of an abnormal driving state determining apparatus to which a neural network model is applied, and FIG. 2 is a block diagram of an abnormal driving state determining apparatus to which a neural network model is applied according to an embodiment of the present disclosure.

As shown in FIGS. 1 and 2, an apparatus for determining an abnormal driving(operation) state to which a neural network model according to an embodiment of the present disclosure is applied (hereinafter, referred to as "abnormal driving state determination device") may include an abnormal driving state data generation unit 100 , an abnormal driving state data learning unit 200, an abnormal driving state determination unit 300, an abnormal driving state monitoring unit 400, and a procedure providing unit 500.

The abnormal driving state data generation unit 100 is a configuration that virtually generates abnormal driving state data based on information on an abnormal driving state, and may include a scenario database 110 and a simulator 120.

The scenario database 110 is a configuration in which a number of scenarios related to abnormal driving states are provided. These scenarios include scenarios according to operating variables related to change in temperature of nuclear power plant equipment, scenarios according to operating variables related to turbine bearing vibration, and the like, and scenarios related to various abnormal driving states are stored in the scenario database 110.

The simulator 120 is a configuration that simulates an abnormal driving state with respect to a scenario selected from among the scenarios related to the abnormal driving states stored in the scenario database 110. Accordingly, data on the abnormal driving state may be virtually generated.

The abnormal driving state data learning unit 200 is a configuration that visualizes and learns an abnormal driving state by applying a visualization algorithm based on the abnormal driving state data generated by the abnormal driving state data generation unit 100. The abnormal driving state data learning unit 200 may include a first visualization arrangement unit 210 and a second visualization arrangement unit 220.

The first visualization arrangement unit 210 is a configuration that arranges based on physical locations of operating variables of equipment provided in a nuclear power plant. That is, the operating variables may be arranged in the same arrangement as the structure of an actual nuclear power plant.

The second visualization arrangement unit 220 is a configuration that preferentially arranges physically identical operating variables. For example, operating variables related to temperature are arranged in the same zone so that when temperature changes occur, the characteristics of each event appear.

The abnormal driving state determination unit 300 is a configuration that learns an abnormal driving state based on the abnormal driving state data learning unit 200 representing driving variables by applying a visualization algorithm and then determines whether the abnormal driving state has occurred based on operating variables of equipment obtained from process monitoring and alarming system of the nuclear power plant. The abnormal driving state determination unit 300 may include a neural network model 310 and a signal matching unit 320.

The neural network model 310 is a configuration that learns abnormal driving state data visualized by the first visualization arrangement unit 210 and the second visualization arrangement unit 220 based on a visualization algorithm.

The signal matching unit 320 is a configuration that transmits information on a monitoring signal including information on abnormal driving states to correspond to equipments, so that the procedure provision unit 500 can distinguish the abnormal driving states.

The abnormal driving state monitoring unit 400 is a configuration that monitors whether a driving state of each equipment provided in the nuclear power plant is within a normal range. The abnormal driving state monitoring unit 400 may periodically acquire a monitoring signal including information on operating variables of each equipment and transmit the monitoring signal to the abnormal driving state determination unit 300.

The procedure providing unit 500 is a configuration that provides an operator with a procedure including a response to an abnormal driving state when it is determined by the abnormal driving state determination unit 300 that the equipment is in an abnormal driving state.

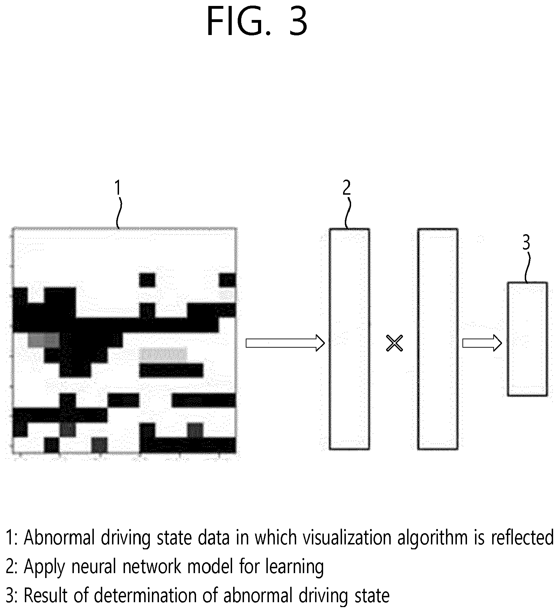

Hereinafter, the overall operation process of an abnormal driving state determining apparatus to which the neural network model 310 is applied will be schematically described with reference to FIG. 3.

FIG. 3 is a diagram schematically illustrating an operation process of an abnormal driving state determining apparatus to which the neural network model 310 is applied according to an embodiment of the present disclosure.

As shown in FIG. 3, in the present disclosure, a visualization algorithm is first applied to virtually generate an abnormal driving state data. The abnormal driving state data may be generated in a manner in which the abnormal driving state data generation unit 100 generates information based on a scenario and then the abnormal driving state data learning unit 200 applies a visualization algorithm.

Thereafter, the neural network model 310 provided in the abnormal driving state determination unit 300 learns the abnormal driving state data to which the visualization algorithm is applied.

After the neural network model 310 learns the abnormal driving state data to which the visualization algorithm is applied as described above, whether the equipments are in the abnormal driving state may be monitored periodically so as to determine the abnormal driving state.

Hereinafter, a process of determining an abnormal driving state using the neural network model 310 will be described with reference to the drawings.

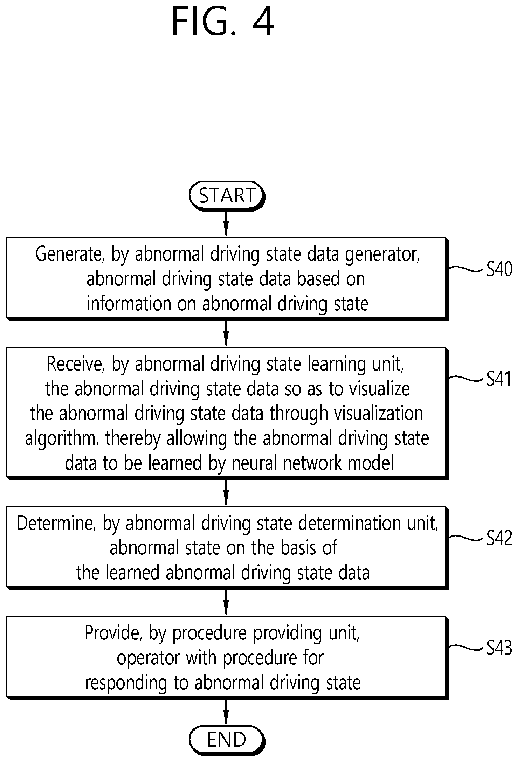

FIG. 4 is a flowchart of an abnormal driving state determining apparatus to which the neural network model 310 is applied according to an embodiment of the present disclosure.

As shown in FIG. 4, the abnormal operation state data generation unit 100 initially generates abnormal operation state data based on information on an abnormal operation state. <S40>

As the abnormal driving state data generation unit 100 is provided with the scenario database 110 and the simulator 120, the simulator 120 may arbitrary generate an abnormal driving state based on a scenario for each abnormal driving state stored in the scenario database 110. As such, information on the abnormal driving state data arbitrarily generated by the simulator 120 may be transmitted to the abnormal driving state learning unit.

Thereafter, the abnormal driving state learning unit receives the generated abnormal driving state data so as to visualize the abnormal driving state data through a visualization algorithm, thereby allowing the abnormal driving state data to be learned by the neural network model 310 <S41>.

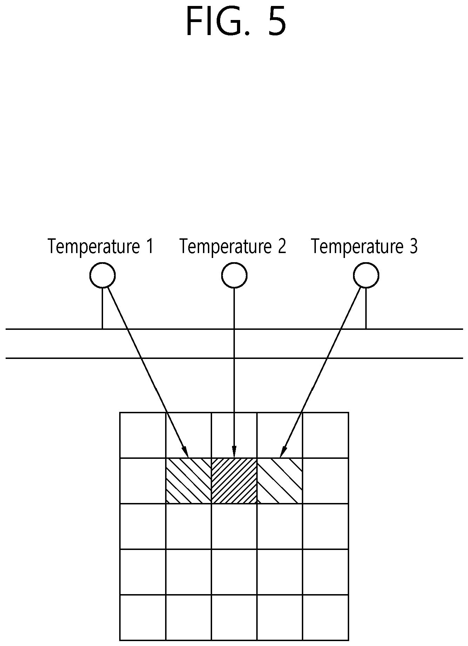

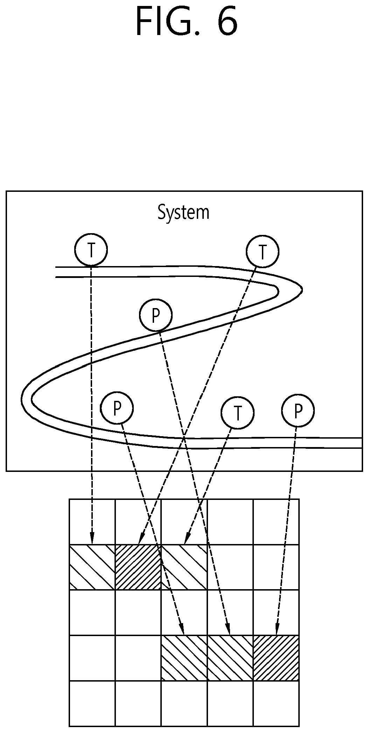

The abnormal driving state data is visualized by the first visualization arrangement unit 210 and the second visualization arrangement unit 220 through the visualization algorithm so that the neural network model 310 can learn the abnormal driving state data. This will be described with reference to FIGS. 5 and 6.

FIG. 5 is a diagram schematically illustrating that operating variables are arranged according to physical locations of the operating variable by the first visualization arrangement unit 210 in the abnormal driving state determining apparatus to which the neural network model 310 is applied according to an embodiment of the present disclosure.

As shown in FIG. 5, the first visualized arrangement unit 210 may be arranged based on the physical locations of the operating variables for equipments of a nuclear power plant.

For example, when the first visualization arrangement unit 210 visualizes temperature of a pipe in a nuclear power plant according to a pipe arranged in the actual nuclear power plant, a change according to the location of the temperature may be reflected in the visualization, and thus, the accuracy of the abnormal driving state may be increased when the state of the corresponding pipe is learned and determined. That is, Temperature 1, Temperature 2, and Temperature 3 may be arranged and visualized at adjacent locations by the first visualization arrangement unit 210 based on the visualization algorithm.

Therefore, in a case where the visualization algorithm is used, if an event such as a pipe breakage occurs, the operating variables at the locations where the actual event occurs are collected and arranged, and thus, it may be advantageous in extracting the corresponding characteristics during the pre-processing convolution and pooling of the neural network model 310.

Here, the operating variables are operating factors for the driving state of the equipments of the nuclear power plant, and each equipment may include about 1000 to 2000 operating variables. These operating variables may include pressure, temperature, and flow.

In addition, FIG. 6 is a diagram schematically illustrating that operating variables are arranged according to physical characteristics of the operating variables by the second visualization arrangement unit 220 in the abnormal driving state determining apparatus, to which the neural network model 310 is applied according to an embodiment of the present disclosure.

As shown in FIG. 6, the second visualization arrangement unit 220 may preferentially arrange physically identical variables.

For example, the second visualization arrangement unit 220 arranges the operating variables related to temperature at the same location and visualizes the characteristics of each event when a temperature change occurs. That is, in equipment of systems distributed in various locations, T systems may be visualized to be adjacent to each other and P systems may be visualized to be adjacent to each other, so that it is possible to easily learn that abnormal driving states occur in equipment of the T systems and, similarly, it is possible to easily learn that abnormal driving sates occur in equipment of the P systems.

Therefore, since the operating variables with the same physical characteristics are arranged at in the same location, a change in a system may be better reflected, and since it is advantageous in extracting the corresponding characteristics during convolution and pooling, the accuracy of the abnormal operation state may be increased when the operating variables related to temperature are learned and determined.

As a result, the abnormal driving state determination unit 300 may learn in advance abnormal driving state data that is virtually generated and visualized by the first visualization arrangement unit 210 and the second visualization arrangement unit 220 as described above.

Thereafter, the abnormal driving state determination unit 300 determines an abnormal state on the basis of the learned abnormal driving state data. <S42>

When the abnormal driving state monitoring unit 400 monitors driving states of the equipments of the nuclear power plant and periodically transmits a monitoring signal, the abnormal driving state determination unit 300 which has completed the learning may determine abnormal driving states of the equipments by determining whether the monitoring signal is within a set normal range.

Finally, the procedure providing unit 500 provides an operator with a procedure for responding to the abnormal driving states. <S43>

When it is determined by the abnormal driving state determination unit 300 that the equipments are in the abnormal driving state, the procedure providing unit 500 provides an operator with a procedure for responding to the abnormal driving state of the corresponding equipments, and in this case, procedures are matched in the procedure providing unit 500 to correspond to the types of the equipments and the abnormal driving states.

Therefore, depending on whether the monitoring signal for the abnormal operation state is a monitoring signal corresponding to the types of equipments and abnormal driving state, the signal matching unit 320 of the abnormal driving state determination unit 300 may transmit information on the abnormal driving state to correspond to the equipment, so that the procedure providing unit 500 can distinguish the equipment.

For example, when temperatures of equipment are related, the abnormal driving state determination unit 300 provides information on equipments with abnormal temperature to the procedure providing unit 500, and the procedure providing unit 500 may classify the equipment and provide an operator with a procedure related to the temperatures.

As described above, in the present disclosure, by learning the abnormal driving state using the neural network model 310 through a visualization algorithm and then detecting the abnormal driving state of the equipments, it is possible to help the operator easily respond to the abnormal driving state.

While the preferred embodiments of the present disclosure have been disclosed for illustrative purposes, those skilled in the art will appreciate that variations, modification, and addition may be made without departing from the scope and spirit of the present disclosure, and that such variation, modification, and additions are encompassed in the appended claims.

## Claims

1. An abnormal driving state determination device using a neural network model, the device comprising:
an abnormal driving state data generation unit configured to generate abnormal driving state data based on information on an abnormal driving state;
an abnormal driving state learning unit configured to receive the abnormal driving state data so as to visualize the abnormal driving state data through a visualization algorithm, thereby allowing the abnormal driving state data to be learned by a neural network model; and
an abnormal driving state determination unit provided with a neural network model for determining an abnormal state on the basis of the learned abnormal driving state data.

2. The device of claim 1,
wherein the abnormal driving state learning unit is provided with a first visualization arrangement unit,
wherein the first visualization arrangement unit arranges operating variables based on physical locations, thereby collecting and arranging operating variables corresponding to locations where an abnormal driving state occurs.

3. The device of claim 1,
wherein the abnormal driving state learning unit is provided with a second visualization arrangement unit,
wherein the second visualization arrangement unit preferentially arranges physically identical variables.

4. The device of claim 1,
wherein the abnormal driving state data generation unit comprises a scenario database and a simulator,
wherein the simulator generates the abnormal driving state data by implementing the abnormal driving state based on a driving scenario for the abnormal driving state, which is stored in the scenario database.

5. The device of claim 1,
wherein since the neural network model is provided as a plurality of neural network models, the abnormal driving state data to be learned differs according to an operating variable.

6. The device of claim 1,
wherein when the abnormal driving state determination unit determines an abnormal driving state, a procedure providing unit provides an abnormal driving procedure comprising a response to the abnormal driving state.

7. The device of claim 1,
wherein the abnormal driving state determination unit further comprises a matching unit,
wherein the signal matching unit transmits information on an abnormal driving state to correspond to equipment.

8. An abnormal driving state determining method using a neural network model, the method comprising:
generating, by an abnormal driving state data generating unit, abnormal driving state data based on information on an abnormal driving state;
receiving the abnormal driving state data so as to visualize the abnormal driving state data through a visualization algorithm, thereby allowing the abnormal driving state data to be learned by a neural network model;
determining an abnormal state on the basis of the learned abnormal driving state data by an abnormal driving state determination unit; and
providing, by a procedure providing unit, an operator with a procedure for responding to the abnormal driving state.
